# EUROPEAN PATENT APPLICATION

(11) **EP 3 647 465 A1**
(43) Date of publication of application: **06.05.2020**
(21) Application number: 18204382.8
(22) Date of filing: 05.11.2018
(51) Int. Cl.: C23F 13/14, C22C 18/04

(54) **ZINK-BASED SACRIFICIAL ANODE ALLOY, USE OF A ZINK-BASED ALLOY, AND A SACRIFICIAL ANODE**

(71) Applicant: BAC Corrosion Control A/S, 4681 Herfølge (DK)
(72) Inventor: Thomsen, Christian, 4681 Herfølge (DK)
(74) Representative: Budde Schou A/S

(57) **Abstract**

A zinc-based alloy suitable as a sacrificial anode comprises 0.1 - 1.0% by weight of aluminum, preferably more than 0,6% and maximum 1.0%; 0.008 - 0.3% by weight of indium, more than 0.005% and maximum 1.0% by weight of tin, maximum 0.005% by weight of lead, and preferably less than 0,001%; maximum 0.005% by weight of copper, and preferably less than 0,001%; maximum 0.005% by weight of other metals, in particular nickel and thallium; and balance zinc having a purity of about 99.995%. The alloy shows advantageous properties with respect to resistance to cracking and breaking during post machining of the casting, especially when producing sacrificial anodes having relatively large dimensions.

## Description

The present invention relates to a zink-based sacrificial anode alloy, use of a zinc-based alloy, and a sacrificial anode.

### BACKGROUND ART

Know alloys, such as those e.g. known from WO 00/26426, can be used for casting anodes. However, when larger anodes are needed, the inventor has realised that a tendency of breaking or crack development can be observed in such anodes, especially in connection with machining, e.g. threading or boring, after casting of the anodes.

Sacrificial anodes, also known as galvanic anodes, are made from highly active metals that are used to prevent a less active material surface from corroding. Sacrificial anodes are typically used in salt water to prevent corrosion of the hulls of ships, offshore pipelines and offshore platforms. Instead of the metal of e.g. the hull of a ship being corroded, the sacrificial anode will be corroded instead. Hereby the term "sacrificial" anode.

Since the sacrificial anode works by introducing another metal surface with a more negative electronegative and a much more anodic surface. The current will flow from the newly introduced anode, and the protected metal becomes cathodic, creating a galvanic cell. The oxidation reactions are transferred from the metal surface to the galvanic anode and will be sacrificed in favor of the protected metal structure.

The electrochemical reaction taking place is generally along the following scheme for a ferrous material:

Fe → Fe²⁺ + 2e⁻

O₂ + 2H₂O + 4e⁻ → 4OH⁻

2H₂O + 2e⁻ → H₂ + 2OH⁻

In most environments, the hydroxide ions and ferrous ions combine to form ferrous hydroxide, also known as rust:

Fₑ²⁺ + 2OH⁻ → Fe(OH)₂

It is desired to prevent, or at least reduce, the deterioration of the ferrous material, as this is the main structural material of the construction in question. Therefore a sacrificial metal ranking lower in the electrochemical scheme (more negative electrochemical potential), and accordingly being more prone to the electrochemical reaction, is placed in electrical connection with the main construction and protecting this from deterioration.

Zinc and aluminum are generally used in salt water, where the resistivity is generally lower.

The applicant company has been producing and developing sacrificial anodes for years, and when sacrificial anodes are produced especially in large sizes, with a length ranging up to a couple of meters, the anodes, upon casting and later during machining, have a tendency to crack and break. This results in loss of profits, as a cracked anode cannot be used and has to be discarded.

Further, in order to establish the aimed casting properties of the anode alloy, it is extremely difficult to establish an anode with the desired efficiency, especially an efficiency above 800Ah/kg.

### DISCLOSURE OF THE INVENTION

Based on this prior art, it is an object of the present invention to provide a new zinc-based alloy which is suitable as a sacrificial anode alloy and which can be cast in relatively large dimensions, such as up to a couple of meters, and to prevent crack development in the anode. Further, it is an object of the invention to provide a zinc-alloy by arranging the sacrificial anode with an efficiency higher than approx. 800 Ah/kg.

The above objects and advantages, which will be evident from the description of the present invention, are according to a first aspect of the present invention obtained by:
A zinc-based alloy for a sacrificial anode, the alloy comprising:
   0.1 - 1.0% by weight of aluminum, preferably more than 0,6% and maximum 1.0%;
   0.008 - 0.3% by weight of indium,
   more than 0.005% and maximum 1.0% by weight of tin,
   maximum 0.005% by weight of lead, and preferably less than 0,001%;
   maximum 0.005% by weight of copper, and preferably less than 0,001%;
   maximum 0.005% by weight of other metals, in particular nickel and thallium; and
   balance zinc having a purity of about 99.995%.

Surprisingly, experiments made by the inventor have revealed that an alloy comprising
0.1 - 1.0% by weight of aluminum, preferably more than 0,6% and maximum 1.0%;
0.008 - 0.3% by weight of indium;
more than 0.005% and maximum 1.0% by weight of tin;
maximum 0.005% by weight of lead, and preferably less than 0,001%;
maximum 0.005% by weight of copper, and preferably less than 0,001%;
maximum 0.005% by weight of other metals, in particular nickel and thallium; and
balance zinc having a purity of about 99.995 %, makes it possible to cast relatively large sacrificial anodes with a length of up to a couple of meters without the tendency of breaking or crack development in connection with casting and post-machining of the castings. Furthermore, experiments by the inventor have shown that the efficiency of the sacrificial anode incorporating the above-mentioned alloy is above 800 Ah/kg.

According to a further embodiment of the first aspect, the alloy comprises:
0.1 - 1.0% by weight of aluminum, preferably more than 0,6% and maximum 1.0%; more than 0,008% and less than 0,2% by weight of indium;
more than 0.005% and maximum 1.0% by weight of tin;
maximum 0.005% by weight of lead, and preferably less than 0,001%;
maximum 0.005% by weight of copper, and preferably less than 0,001%;
maximum 0.005% by weight of other metals, in particular nickel and thallium; and
balance zinc having a purity of about 99.995%.

According to a further embodiment of the first aspect, the alloy comprises:
0.1 - 1.0% by weight of aluminum, preferably more than 0,6% and maximum 1.0%;
0.008 - 0.3% by weight of indium;
0,01% - 0,05% by weight of tin;
maximum 0.005% by weight of lead, and preferably less than 0,001%;
maximum 0.005% by weight of copper, and preferably less than 0,001%;
maximum 0.005% by weight of other metals, in particular nickel and thallium; and
balance zinc having a purity of about 99.995%.

The above mentioned embodiments have, according to tests performed by the inventor, proven to be especially prosperous in avoiding crack development and arranging the anode with a high efficiency.

According to a further embodiment of the first aspect, the alloy comprises:
0.1 - 1.0% by weight of aluminum, preferably more than 0,6% and maximum 1.0%;
more than 0,008% and less than 0,2% by weight of indium;
0,01% - 0,05% by weight of tin;
maximum 0.005% by weight of lead, and preferably less than 0,001%;
maximum 0.005% by weight of copper, and preferably less than 0,001%
maximum 0.005% by weight of other metals, in particular nickel and thallium; and
balance zinc having a purity of about 99.995%.

According to a further embodiment of the first aspect, the alloy comprises:
0.1 - 1.0% by weight of aluminum, preferably more than 0,6% and maximum 1.0%;
more than 0,008% and less than 0,2% by weight of indium;
0,01% - 0,05% by weight of tin;
maximum 0.005% by weight of lead, and preferably less than 0,001%;
maximum 0.005% by weight of copper, and preferably less than 0,001%;
less than 0.001% by weight of other metals, in particular nickel and thallium; and
balance zinc having a purity of about 99.995 %.

A sacrificial anode according to the above mentioned aspect, and having less than 0,001% by weight of other materials, has according to tests proven to be especially prosperous in achieving the objectives of the invention.

According to a second aspect of the present invention, the above objects and advantages are obtained by:
Use of a zinc-based alloy according to any of the claims 1-5 as the active part of a sacrificial anode.

According to a third aspect of the present invention, the above objects and advantages are obtained by:
A sacrificial anode, comprising an anode body and a support element, where said anode body comprises a zinc-based alloy according to any of the claim 1-5.

The invention is further illustrated by means of the following test results obtained with an alloy according to the present invention, the test having been carried out according to the directions in the 'Det Norske Veritas' Offshore-standard RP.B.401; the potentials have been measured vs. Ag/AgCI/seawater.

### Example of an alloy in accordance with the present invention:

| | |
|---|---|
| Al: | 0.28% |
| Sn: | 0.019% |
| In: | 0,008% |
| Pb: | <0,001% |
| Cu: | <0.001% |
| Other metals: | <0.001% |

and balance zinc having a purity of about 99.995%.

### Performance data:

| | |
|---|---|
| Capacity: | 806 Ah/kg |
| Consumption rate: | 0,045 kg/A year |
| Closed circuit potential: | -940 mV vs. Ag/AgCI/seawater |

Using this alloy, it has been possible to cast anodes of different sizes, including relatively large dimensions such as up to a couple of meters, and to prevent the anode from cracking. Further, tests by the inventor have shown that when using the above mentioned alloy, sacrificial anodes with an efficiency higher than approx. 800 Ah/kg are obtained.

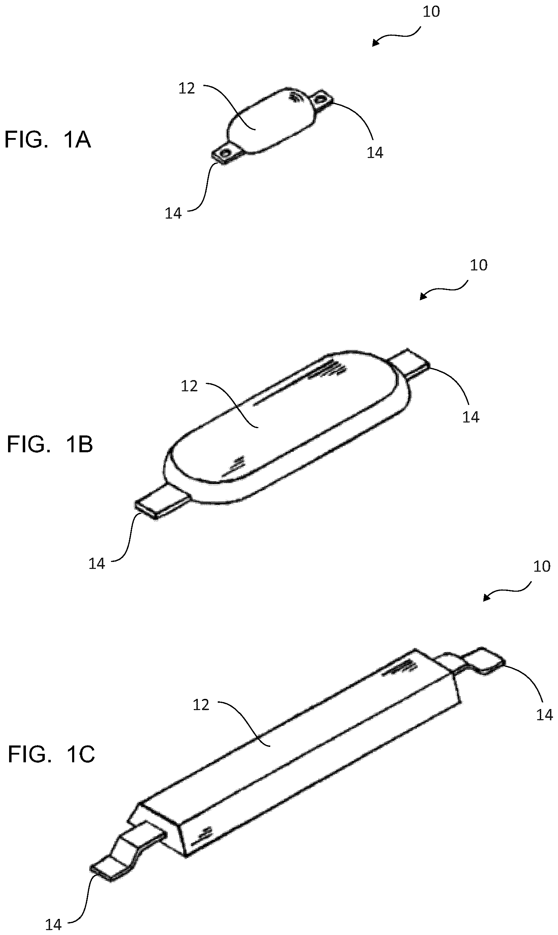

Fig. 1A-1C show perspective views of a sacrificial anode.
Fig. 1A-1C show perspective views of three possible embodiments of a sacrificial anode 10 comprising the zinc-based alloy according to claim 1. The construction of the sacrificial anode 10 according to claim 4 should however not be limited to such constructions as shown in the figures, as the skilled person is well aware that sacrificial anodes come in a variety of sizes and forms.
Each sacrificial anode 10 comprises an anode body 12, which comprises the anode metal alloy with a more negative electrochemical potential than the metal it is protecting. In the present invention, the anode body 12 comprises the zinc-based alloy according to claim 1. The sacrificial anode further comprises a support 14 element arranged in connection with the anode body for connecting the sacrificial anode to the construction it is intended to protect, e.g. the hull of at ship or an offshore construction.

In a preferred embodiment, the support element 14 is a one-piece element extending through the anode bode, but in an alternative embodiment it may be arranged as separate support elements 14 connected to the anode body 12 at different locations.

In the following is given a list of reference signs that are used in the detailed description of the invention and the drawings referred to in the detailed description of the invention.
- 10: Sacrificial anode
- 12: Anode body
- 14: Support element

## Claims

1. A zinc-based alloy for a sacrificial anode, said alloy comprising:
0.1 - 1.0% by weight of aluminum, preferably more than 0,6% and maximum 1.0%;
0.008 - 0.3% by weight of indium;
more than 0.005% and maximum 1.0% by weight of tin;
maximum 0.005% by weight of lead, and preferably less than 0,001%;
maximum 0.005% by weight of copper, and preferably less than 0,001%;
maximum 0.005% by weight of other metals, in particular nickel and thallium; and
balance zinc having a purity of about 99.995%.

2. A zinc-based alloy according to claim 1, where said alloy comprises:
0.1 - 1.0% by weight of aluminum, preferably more than 0,6% and maximum 1.0%;
more than 0,008% and less than 0,2% by weight of indium;
more than 0.005% and maximum 1.0% by weight of tin;
maximum 0.005% by weight of lead, and preferably less than 0,001%;
maximum 0.005% by weight of copper, and preferably less than 0,001%;
maximum 0.005% by weight of other metals, in particular nickel and thallium; and
balance zinc having a purity of about 99.995%.

3. A zinc-based alloy according to claim 1, where said alloy comprises:
0.1 - 1.0% by weight of aluminum, preferably more than 0,6% and maximum 1.0%;
0.008 - 0.3% by weight of indium;
0,01% - 0,05% by weight of tin;
maximum 0.005% by weight of lead, and preferably less than 0,001%;
maximum 0.005% by weight of copper, and preferably less than 0,001%;
maximum 0.005% by weight of other metals, in particular nickel and thallium; and
balance zinc having a purity of about 99.995%.

4. A zinc-based alloy according to claim 1 or 2, said alloy comprising:
0.1 - 1.0% by weight of aluminum, preferably more than 0,6% and maximum 1.0%;
more than 0,008% and less than 0,2% by weight of indium;
0,01% - 0,05% by weight of tin;
maximum 0.005% by weight of lead, and preferably less than 0,001%;
maximum 0.005% by weight of copper, and preferably less than 0,001%;
maximum 0.005% by weight of other metals, in particular nickel and thallium; and
balance zinc having a purity of about 99.995%.

5. A zinc-based alloy according to claim 1 or 3, said alloy comprising:
0.1 - 1.0% by weight of aluminum, preferably more than 0.6% and maximum 1.0%;
more than 0,008% and less than 0,2% by weight of indium;
0,01% - 0,05% by weight of tin;
maximum 0.005% by weight of lead, and preferably less than 0,001%;
maximum 0.005% by weight of copper, and preferably less than 0,001%;
less than 0.001% by weight of other metals, in particular nickel and thallium; and
balance zinc having a purity of about 99.995%.

6. Use of a zinc-based alloy according to any of the claims 1-5 as the active part of a sacrificial anode.

7. A sacrificial anode, comprising an anode body and a support element, where said anode body comprises a zinc-based alloy according to any of the claims 1-5.
